# EUROPÄISCHE PATENTSCHRIFT

(11) **EP 3 411 686 B1**
(45) Veröffentlichungstag und Bekanntmachung des Hinweises auf die Patenterteilung: **30.11.2022**
(21) Anmeldenummer: 17702635.8
(22) Anmeldetag: 02.02.2017
(51) Int. Cl.: G01M 17/08, G01L 5/28, B60T 17/22, G01L 5/00

(54) **VORRICHTUNG UND VERFAHREN ZUR KRAFTMESSUNG FÜR EINEN BREMSKRAFTPRÜFSTAND**
APPARATUS AND METHOD FOR MEASURING BRAKE FORCE IN A BRAKE TESTBENCH
APPAREIL ET PROCÉDÉ DE MESURE D'UNE FORCE DE FREIN DANS UN TEST DE FREIN

(30) Priorität: 03.02.2016 DE 102016101838
(43) Veröffentlichungstag der Anmeldung: 12.12.2018
(60) Teilanmeldung: 22199726.5
(73) Patentinhaber: KNORR-BREMSE Systeme für Schienenfahrzeuge GmbH, 80809 München (DE)
(72) Erfinder: MATHIEU, Michael, 82178 Puchheim (DE); ELSTORPFF, Marc-Gregory, 80368 München (DE); SOUKUP, Frederic, 80805 München (DE); EBNER, Christian, 86356 Neusäss (DE); HELLMER, Frank, 80809 München (DE); ZÜNKELER, Sebastian, 80992 München (DE)
(86) Internationale Anmeldenummer: PCT/EP2017/052248
(87) Internationale Veröffentlichungsnummer: WO 2017/134163

(56) Entgegenhaltungen:
- GB-A- 2 372 825
- US-A- 6 098 760
- US-A1- 2008 078 629

## Beschreibung

Die vorliegende Erfindung bezieht sich auf eine Vorrichtung und ein Verfahren zur Kraftmessung für einen Bremskraftprüfstand und insbesondere auf eine Vorrichtung zur Messung von Bremskraftvektoren in Reibungsprüfständen.

Reibungs- bzw. Dynamometerprüfstände werden heute regelmäßig eingesetzt, um Reibpaarungen von einem Bremsbelag und einer Bremsscheibe systematisch zu untersuchen. Dabei werden typischerweise ein Drehmoment, eine Drehzahl und ggf. eine Zuspannkraft kontinuierlich gemessen. Mit Hilfe eines definierten Reibradius (Abstand vom Mittelpunkt zu jenem Punkt, an dem die Bremskraft auf das Rad angreift) wird darauf basierend eine Reibungszahl errechnet. In diesen Prüfständen werden die Bremsaktuatoren fest mit einem Rahmen des Prüfstandes verbunden und die Messung wird ohne eine Änderung der Position der Bremsaktuatoren durchgeführt. Dokumente des Standes der Technik, die für die Erfindung relevant sind, sind die folgenden: GB 2 372 825 A, US 2008/078629 A1 and US 6 098 760 A.

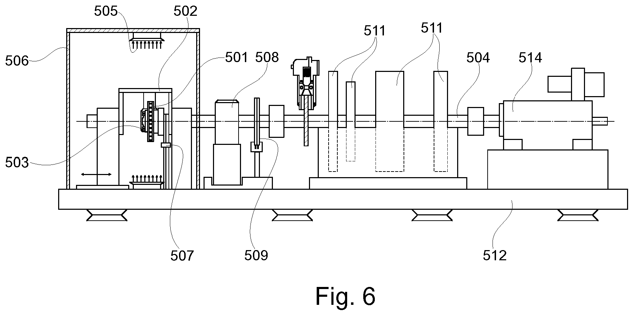

Fig. 6 zeigt ein Beispiel für einen Dynamometerprüfstand zur Prüfung der Reibung für Bremssysteme. Ein Versuchskörper 501 besteht aus einem rotierenden Teil (Rad- oder Bremsscheibe oder beides kombiniert) und einem statischen Teil (Bremssattel, Radbremseinheit etc.). Ein elektrischer Motor 514 beschleunigt ein Schwungradsatz 511 auf eine gewünschte Geschwindigkeit. Die Schwungräder 511 können individuell oder gemeinsam mit einer Welle 504 verbunden werden, um die Masse bereitzustellen, die abgebremst werden soll. Der Motor 514 kann dabei als zusätzliche Bremse wirken oder kann ebenfalls eine zusätzliche Bremsmasse simulieren. Die drehende Versuchsprobe 501 bremst die Schwungräder 511 und den Motor 514 durch das Betätigen des Bremsaktuators 503 ab. Der Bremsaktuator 503 ist an einem Bremsrahmen 502 befestigt, der eine konzentrische Halterung zur Welle 504 aufweist. Der Bremsrahmen 502 wird in der Drehrichtung durch einen Kraftwandler 507 an einen Rahmen 512 gehalten. Mit der gemessenen Kraft ist es möglich, das Bremsdrehmoment zu bestimmen und den Reibungskoeffizienten zwischen der Bremsscheibe und den Bremsklötzen zu berechnen. Die Versuchsprobe 501 wird dabei in einer Testkammer 506 platziert, in welcher die Umgebung und der Luftstrom 505 entsprechend zu der Zuggeschwindigkeit simuliert wird, um realistische Bedingungen für den Test zu erzeugen.

Abgesehen von dem Bremsdrehmoment und der Bremssattelkraft werden Messsensoren in der Versuchsprobe 501 zum Messen der Temperaturen genutzt und, falls erforderlich, zum Messen der Spannung an den Positionen von besonderem Interesse. Ein Telemetrie-System 509 überträgt die Messresultate von der rotierenden Versuchsprobe 501 an ein Aufnahmegerät.

Abgesehen von dynamischen Bremstests gibt es auch statische Tests (z.B. für die Parkbremse). Für diese Art von Tests ist das Dynamometer mit einer separaten Parkbremseinrichtung 508 ausgerüstet, die ein Drehmoment auf die Welle 504 bei einem Stillstand des Dynamometers ausübt, und zwar mit angelegter Parkbremskraft an den Bremsaktuatoren 503.

Alle Einrichtungen sind an dem Rahmen 512 befestigt, der zusätzlich die Konstruktion stabilisiert. Im Fall einer Überladung oder eines Notfalles hat das Dynamometer verschiedene Sicherheitsmerkmale, um die Versuchsprobe so schnell wie möglich anzuhalten.

Die gezeigte konventionelle Anlage weist die folgenden Nachteile oder Probleme auf. Typischerweise ist es unter realen Bedingungen so, dass die Verteilung der Flächenpressung über die Bremsung nicht konstant ist, sondern sich mit der Zeit ändert. Damit ändern sich ebenfalls der Reibradius und die Richtung der Bremskraft. Wenn diese Richtungen oder Änderungen nicht bekannt sind, kann die Reibungszahl nicht korrekt ermittelt werden. Außerdem kommt in der Praxis häufig der Fall vor, dass Relativbewegungen zwischen dem Aktuator und der Bremsscheibe zu einer Veränderung des Bremskraftvektors führen. Dies tritt beispielsweise bei einem Einfedern von Eisenbahn-Drehgestellen auf. Derartige Bedingungen können in den konventionellen Standardprüfständen nicht ohne größeren Aufwand nachvollzogen werden.

Daher besteht ein Bedarf, die vorhandenen Prüfstände derart zu verbessern, dass die genannten Probleme vermieden werden können.

Die obengenannte technische Aufgabe wird durch eine Vorrichtung zur Kraftmessung nach Anspruch 1 und ein Verfahren zur Kraftmessung nach Anspruch 9 gelöst. Die abhängigen Ansprüche beziehen sich auf vorteilhafte Weiterbildungen der Gegenstände der unabhängigen Ansprüche.

Der Bremskraftprüfstand ist beispielsweise ein Dynamometerprüfstand (z.B. wie er zuvor beschrieben wurde), der ein Bremsdrehmoment messen kann. Der feste Rahmen stellt einen festen Bezug her, so dass er bis auf eine optionale Stoßdämpfung als unbeweglich angesehen werden kann, um nach der Kraftmessung das Bremsdrehmoment aufzunehmen. Die zumindest zwei Kräfte sind nicht notwendigerweise Translations- oder Linearkräfte, sondern können ebenfalls Drehmomente oder Drehkräfte sein. Die zumindest zwei Kräfte können beispielsweise dadurch charakterisiert sein, dass es sich um zwei lineare Kräfte handelt, die in verschiedenen Richtungen wirken, bzw. um Drehmomente, die um verschiedene Drehachsen wirken.

Gemäß weiteren Ausführungsbeispielen umfasst die Kraftmesseinrichtung zumindest zwei Kraftsensoren, die ausgebildet sind, um Translationskräfte oder Drehmomente zwischen der Aktuatorhalterung und der Rahmenbefestigung zu erfassen. Die Kraftmesseinrichtung kann beispielsweise zwischen einem ersten Punkt auf der Aktuatorhalterung und einem zweiten Punkt auf der Rahmenbefestigung angeordnet sein, um Kräfte, die zwischen diesen beiden Punkten wirken, zu messen. Die zumindest zwei Kraftsensoren sind dabei beispielsweise ausgebildet, um die zumindest zwei Kräfte unabhängig voneinander zu messen. Die beiden Punkte, zwischen denen die Kräfte gemessen werden, sind beispielsweise Fixierungspunkte, an denen Fixierungsteile befestigt sein können, die eine Basis bilden, um beispielsweise mittels einer relativ verschiebbaren/deformierbaren Verbindungsstruktur Kraftmessungen vorzunehmen. Diese Messung kann insbesondere während des Bremstests erfolgen und eine Steuereinheit kann vorgesehen sein, um die Messung zu steuern.

Optional können die zumindest zwei Kraftsensoren ebenfalls zumindest eine Verdrehung zwischen der Aktuatorhalterung und der Rahmenbefestigung erfassen.

Gemäß weiteren Ausführungsbeispielen sind die zumindest zwei Kraftsensoren paarweise an mehreren Punkten der Aktuatorhalterung und der Rahmenbefestigung angeordnet, um an den mehreren Punkten jeweils zwei senkrecht aufeinander wirkende Kraftkomponenten zu erfassen. Beispielsweise kann die Aktuatorhalterung und/oder die Rahmenbefestigung jeweils eine Platte aufweisen und die zumindest zwei Kraftsensoren sind zwischen Befestigungspunkten auf der Platte der Aktuatorhalterung und auf der Platte der Rahmenbefestigung angeordnet.

Gemäß weiteren Ausführungsbeispielen umfasst die Vorrichtung einen Kraftsensor, der ausgebildet ist, um ein Drehmoment zwischen der Rahmenbefestigung und dem festen Rahmen zu messen. Dieser Kraftsensor kann beispielsweise ein ähnlicher Kraftwandler (Transducer) sein, wie er in dem konventionellen Dynamometerprüfstand vorhanden ist.

Gemäß weiteren Ausführungsbeispielen umfasst die Vorrichtung eine Bewegungseinrichtung, die ausgebildet ist, um die Rahmenbefestigung relativ zu dem festen Rahmen in zumindest eine Richtung zu verschieben oder zu verdrehen (um zumindest eine Drehachse). Die Bewegungseinrichtung ist insbesondere ausgebildet, um während eines Bremstestes die entsprechenden Bewegungen auszuführen. Beispielsweise kann dafür die beispielhafte Steuereinheit genutzt werden, die die Bewegungseinrichtung ansteuert, so dass während eines Bremstestes auf dem Bremskraftprüfstand die Rahmenbefestigung relativ zu dem festen Rahmen in eine oder mehrere Richtung(en) in vorbestimmter Weise verschoben wird bzw. um eine oder mehrere Richtungen gedreht wird. Beispielsweise kann dies nacheinander erfolgen, so dass zunächst eine Verschiebung in eine Richtung und dann eine Verschiebung in eine weitere Richtung oder eine Drehung um eine weitere Achse erfolgt.

Die Erfindung betrifft ebenfalls eine weitere Vorrichtung zur Kraftmessung in einem Bremskraftprüfstand, wobei der Bremskraftprüfstand wieder einen Bremsaktuator und einen festen Rahmen aufweist. Diese weitere Vorrichtung umfasst eine Rahmenbefestigung , die ausgebildet ist, um eine Kopplung zwischen dem Bremsaktuator und dem festen Rahmen zu ermöglichen, und eine Bewegungseinrichtung, die ausgebildet ist, um die Rahmenbefestigung relativ zu dem festen Rahmen in zumindest eine Richtung zu verschieben oder um die Rahmenbefestigung beispielsweise um zumindest eine Drehachse zu drehen.

Gemäß weiteren Ausführungsbeispielen umfasst die weitere Vorrichtung eine Aktuatorhalterung, die ausgebildet ist, um den Bremsaktuator zu halten, und eine Kraftmesseinrichtung, die die Aktuatorhalterung und die Rahmenbefestigung verbindet. Die Kraftmesseinrichtung ist beispielsweise ausgebildet, um zumindest zwei Kräfte, die zwischen der Aktuatorhalterung und der Rahmenbefestigung bei einer Radbremsung wirken, zu erfassen. Diese Kraftmessung kann in der gleichen Weise wie bei der zuvor beschriebenen Kraftmessung erfolgen.

Gemäß weiteren Ausführungsbeispielen ist die Bewegungseinrichtung ausgebildet, um die Aktuatorhalterung in zumindest eine Raumrichtung zu verschieben oder um zumindest eine Drehachse zu drehen.

Gemäß weiteren Ausführungsbeispielen umfasst der Bremskraftprüfstand weiter eine Radhalterung für ein zu bremsendes Rad und die Bewegungseinrichtung umfasst beispielsweise zumindest zwei Schienen und/oder zumindest eine Keilstruktur, um die Aktuatorhalterung in zumindest eine horizontale Richtung und/oder eine vertikale Richtung relativ zu der Radhalterung zu verschieben oder darum zu verdrehen. Die horizontale Ebene/Richtung kann beispielsweise relativ zu einer normalen Raddrehbewegung definiert werden, d.h. die Raddrehachse ist in der horizontalen Ebene. Dementsprechend ist die vertikale Richtung eine dazu senkrechte Richtung (z. B. in Richtung der Schwerkraft gerichtet).

Gemäß weiteren Ausführungsbeispielen umfasst die zumindest eine Keilstruktur vier Keilstrukturen, die an vier Punkte der Rahmenbefestigung koppeln, wobei die vier Punkte in einer horizontalten Ebene derart um die Aktuatorhalterung herum angeordnet sind, dass beim Betätigen der Bewegungseinrichtung eine Hebelwirkung bereitgestellt wird.

Die Erfindung betrifft auch einen Bremskraftprüfstand mit einer der zuvor genannten Vorrichtungen und einer Steuereinheit, die ausgebildet ist, um während einer Bremsprüfung die zumindest zwei Kräfte zu messen und/oder die Bewegungseinrichtung zu betätigen. Der Bremskraftprüfstand kann optional weitere Komponenten aufweisen, die in gleicher Weise ausgebildet sind, wie bei dem Dynamometerprüfstand der Fig. 6.

Die Erfindung betrifft ebenfalls ein Verfahren zur Kraftmessung in einem Bremskraftprüfstand, wobei der Bremskraftprüfstand einen Bremsaktuator zum Bremsen eines Rades und einen festen Rahmen aufweist und eine Aktuatorhalterung den Bremsaktuator hält und eine Rahmenbefestigung an dem festen Rahmen befestigt ist. Das Verfahren umfasst ein Bremsen des Rades in dem Bremskraftprüfstand und ein Messen von zumindest zwei Kräften, die zwischen der Aktuatorhalterung und der Rahmenbefestigung bei dem Bremsen des Rades wirken. Das Messen kann beispielsweise während des Bremsens ausgeführt werden.

Gemäß weiteren Ausführungsbeispielen umfasst das Verfahren weiter ein Bewegen der Rahmenbefestigung durch ein Verschieben oder durch ein Drehen relativ zu dem festen Rahmen in zumindest eine Richtung. Auch dieser Schritt kann beispielsweise während des Bremsens ausgeführt werden.

Die Erfindung betrifft ein weiteres Verfahren zur Kraftmessung für einen Bremskraftprüfstand, wobei der Bremskraftprüfstand wieder einen Bremsaktuator und einen festen Rahmen umfasst und der Bremsaktuator über eine Rahmenbefestigung an dem Rahmen befestigt ist. Das weitere Verfahren umfasst ein Bremsen eines Rades in dem Bremsprüfstand und Bewegen der Rahmenbefestigung durch eine Verschiebung oder durch eine Drehung relativ zu dem Rahmen in/um zumindest eine Richtung. Das Bewegen kann beispielsweise während des Bremsens erfolgen.

Gemäß weiteren Ausführungsbeispielen umfasst das Verfahren weiter ein Kalibrieren der Kraftmessung durch eine vorbestimmte Bremsmessung, wobei vorbestimmte Bremsmessung unter zumindest eine der folgenden Bedingungen erfolgt: vorbestimmte Bremsbelege, vorbestimmte Bremsscheibe, vorbestimmte Raddrehgeschwindigkeit, vorbestimmte Trägheitsmasse. Hierbei kann in vorbestimmter Weise ebenfalls die Bewegungseinrichtung betätigt werden, um die Änderung in den Kraftkomponenten zu erfassen und so die Vorrichtung zu kalibrieren.

Die o. g. technische Aufgabe wird dadurch gelöst, dass eine Bremskraftmessung mit Hilfe der Vorrichtung im oder parallel zum Prüfstand durchgeführt werden kann. Insbesondere lässt sich die mit der Zange (bzw. Bremsscheibe) wirkende Reibkraft nach Größe, Position und Richtung bestimmen. Außerdem ermöglichen Ausführungsbeispiele, dass der Aktuator (Bremszange, Bremssattel oder Klotzbremseinheit) im Reibungsprüfstand in einer Vorrichtung montiert werden kann, die ein Verschieben relativ zur Bremsscheibe bzw. zum Rad während einer Bremsung erlaubt. Da Ausführungsbeispiele in der Lage sind, den Aktuator relativ zur Bremsscheibe bzw. zum Rand zu verschieben, können Ausführungsbeispiele die realen Bedingungen im Betrieb simulieren. Damit ist es möglich, den Einfluss auf das Bremsverhalten in Bezug auf das Bremsmoment und der Verschleiß genauer zu untersuchen.

Die Ausführungsbeispiele der vorliegenden Erfindung werden besser verstanden von der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränkt, sondern lediglich der Erklärung und dem Verständnis dienen.
- Fig. 1: zeigt eine schematische Darstellung einer Vorrichtung zur Kraftmessung gemäß einem Ausführungsbeispiel der vorliegenden Erfindung.
- Fig. 2.: zeigt ein weiteres Ausführungsbeispiel mit weiteren Details des Bremsaktuators und des zu bremsenden Rades.
- Fig. 3.: zeigt weitere Details der Kraftmesseinrichtung mit verschiedenen Kraftsensoren.
- Fig. 4: zeigt ein Gesamtsystem einschließlich eines Teiles des festen Rahmes zur Befestigung der Vorrichtung.
- Fig. 5A,B: zeigen Flussdiagramme für Verfahren gemäßer weiterer Ausführungsbeispiele der vorliegenden Erfindung.
- Fig. 6.: zeigt einen konventionellen Dynamometerprüfstand zur Prüfung von Reibungskennziffern in Bremssystemen.

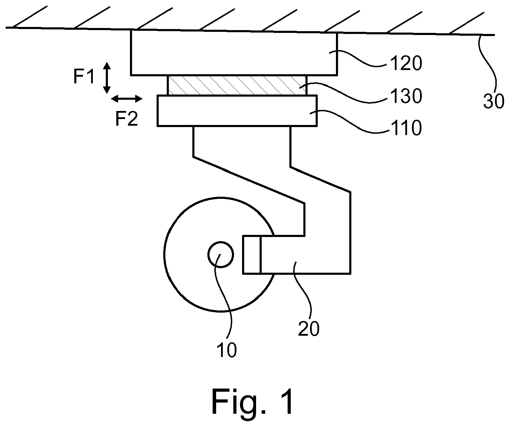

**Fig. 1** zeigt eine Vorrichtung zur Kraftmessung für einen Bremskraftprüfstand, wobei der Bremskraftprüfstand eine Radhalterung 10, einen Bremsaktuator 20 und einen Rahmen 30 aufweist. Die Vorrichtung umfasst eine Aktuatorhalterung 110, eine Rahmenbefestigung 120 und eine Kraftmesseinrichtung 130. Die Aktuatorhalterung ist ausgebildet, um den Bremsaktuator 20 zu halten, die Rahmenbefestigung 120 ist ausgebildet, um eine Befestigung an dem Rahmen 30 zu ermöglichen, und die Kraftmesseinrichtung 130 verbindet Aktuatorhalterung 110 und die Rahmenbefestigung 120 und ist ausgebildet, um zumindest zwei Kräfte oder Drehmomente F1, F2, die zwischen der Aktuatorhalterung 110 und der Rahmenbefestigung 120 wirken, zu erfassen.

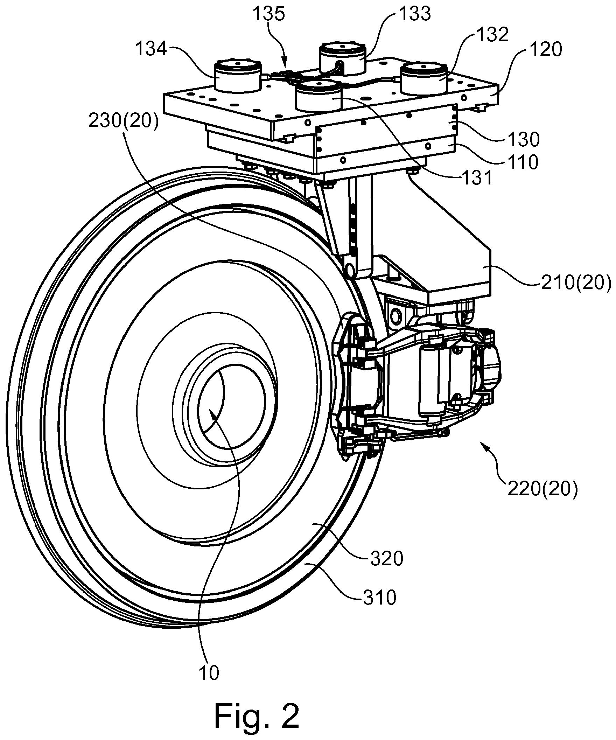

**Fig. 2** zeigt ein weiteres Ausführungsbeispiel mit weiteren Details zur Montage der Vorrichtung an einen Bremsaktuator 20. Der Bremsaktuator 20 umfasst eine Bremshalterung 210, eine Zuspanneinheit 220 und Bremsscheiben 230. Die Bremshalterung 210 ist an der Aktuatorhalterung 110 befestigt (beispielsweise über stabile Schraubverbindungen). Zwischen den Bremsscheiben 230 ist ein Rad mit einem Radkörper 310 und einem Bremsbelag 320 angeordnet, welches auf einer Radhalterung 10 montiert werden kann, die in der Fig. 2 nicht zu sehen ist.

Über die Radhalterung 10 kann das Rad durch einen beispielhaften Elektromotor beschleunigt werden und anschließend über den Bremsaktuator 20 abgebremst werden. Der Bremsaktuator 20 überträgt die dabei wirkenden Kräfte (Linearkräfte oder Drehmomente) auf die Aktuatorhalterung 110 der Vorrichtung. Die Kraftmesseinrichtung 130 kann bei dem Bremsvorgang genau ermitteln, welche Kräfte zwischen der Aktuatorhalterung 110 und der Rahmenbefestigung 120 bei dem Abbremsvorgang des Rades entstehen. Dazu kann die Kraftmesseinrichtung 130 beispielsweise einen ersten Kraftsensor 131, einen zweiten Kraftsensor 132, einen dritten Kraftsensor 133 und einen vierten Kraftsensor 134 aufweisen. Die Kraftsensoren 131 ...134 können beispielsweise an Eckpunkte der Rahmenbefestigung 120 koppeln und die durch die Aktuatorhalterung 110 auf die Kraftmesseinrichtung 130 ausgeübte Kraft bei dem Bremsvorgang messen. Da die Vorrichtung mehrere Kraftsensoren 131, 132, ... aufweist, können damit unabhängig voneinander verschiedene Kraftkomponenten gemessen werden. Die verschiedenen Kraftkomponenten können einerseits rein horizontale oder vertikale (in Schwerkraftrichtung) Verschiebungskräfte sein. Sie können jedoch ebenfalls Drehmomente sein, die als relative Verdrehkräfte zwischen der Aktuatorhalterung 110 relativ zu der Rahmenbefestigung 120 wirken.

Die Rahmenbefestigung 120 ist im Allgemeinen an einem äußeren Rahmen 30 befestigt, der in der Fig. 2 nicht gezeigt ist und der ein festes Bezugssystem herstellt, auf welches letztendlich das Bremsdrehmoment übertragen wird.

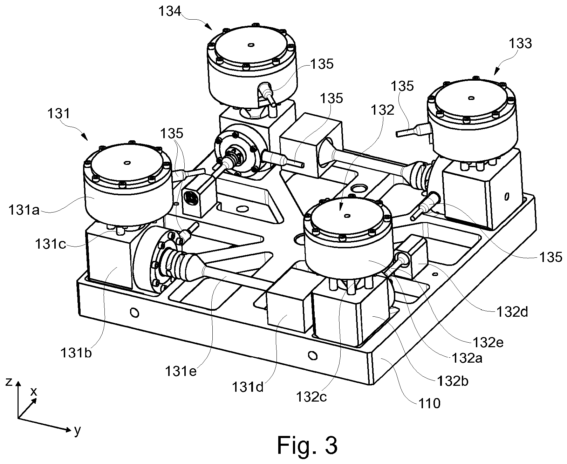

Fig. 3 zeigt weitere Details der Kraftmesseinrichtung 130. Zum Beispiel kann die Kraftmesseinrichtung 130 mehrere Kraftsensoren 131, 132, ... umfassen, die derart verteilt sind, dass Kräfte in verschiedenen Richtungen oder an verschiedenen Punkten messbar sind. Die beispielhaften vier Kraftsensoren 131 ... 134 können gleich aufgebaut sein, können aber an verschiedenen Positionen platziert sein.

Im Folgenden wird der Aufbau der vier Kraftsensoren 131, ..., 134 beispielhaft anhand des ersten Kraftsensors 131 beschrieben, der einen ersten Teil 131a, einen zweiten Teil 131b und einen dritten Teil 131d umfasst. Der erste Teil 131a und der zweite Teil 131b sind durch eine erste Verbindungsstruktur131c entlang der z-Achse miteinander verbunden. Außerdem ist der dritte Teil 131d mit dem zweiten Teil 131b durch einen zweite Verbindungsstruktur 131e entlang der y-Achse miteinander verbunden, wobei die erste Verbindungsstruktur 131c keine relative Verschiebung entlang der y-Achse zulässt (nur entlang der z-Achse). Der erste Teil 131a ist beispielsweise fest mit der Rahmenbefestigung 120 (in der Fig. 3 entfernt) verbunden und der dritte Teil 131d ist fest mit der Aktuatorhalterung 110 verbunden. Der zweite Teil 131c ist beispielsweise bewegbar zu der Aktuatorhalterung 110 angeordnet, so dass er sich beispielsweise entlang einer y-Achse lateral bewegen kann, nicht jedoch entlang der x-Achse oder entlang der z-Achse (relativ zur Aktuatorhalterung 110).

Da der erste Teil 131a (bzw. der dritte Teil 131d) in keiner der drei Translationsrichtungen relativ zur Rahmenbefestigung 120 (bzw. zur Aktuatorhalterung 110) bewegbar ist, verschiebt sich der zweite Teil 131b lateral bei einer relativen Verschiebung zwischen der Aktuatorhalterung 110 und der Rahmenbefestigung 120 entlang der y-Achse. Da die erste Verbindungsstruktur 131c diese Verschiebung auf den zweiten Teil überträgt, kann durch die zweite Verbindungsstruktur 131e die Verschiebungskraft zwischen dem zweiten Teil 131b und dem dritten Teil 131d gemessen werden. Bei einer Verschiebung der Aktuatorhalterung 110 relativ zu der Rahmenbefestigung 120 entlang der z-Achse kann das zweite Teil 131b sich nicht relativ zu der Aktuatorhalterung 110 bewegen, so dass über die erste Verbindungsstruktur 131c zwischen dem ersten Teil 131a und dem zweiten Teil 131b diese Kraftkomponente erfasst werden kann.

Die genannten Verschiebungen sind in der Regel sehr klein bzw. nur so groß, dass eine Kraftmessung möglich ist (können auch nur marginale Deformationen sein). Die Details hängen vor der konkreten Realisierung der Kraftsensoren ab, die jedoch für die vorliegende Erfindung nicht weiter wichtig sind. Als Kraftsensoren können beispielsweise bekannte Sensoren genutzt werden.

Da in dem gezeigten Ausführungsbeispiel für die Kraftmesseinrichtung 130 neben dem eben beschriebenen ersten Kraftsensor 131 an jeder der vier Ecken weitere gleichartige Kraftsensoren angebracht sind, können an jeder Ecke unabhängig voneinander die relative Verschiebung zwischen der Aktuatorhalterung 110 und der Rahmenbefestigung 120 erfasst werden. Alle Kraftsensoren sind sensitiv für Verschiebungen in der z-Achse, während relative Verschiebungen in Richtung der y-Achse durch den ersten Kraftsensor 131 oder den dritten Kraftsensor 133 und in Richtung der x-Achse durch den zweiten Kraftsensor 132 oder den vierten Kraftsensor 134 erfassbar sind. Da in jeder Richtung zumindest zwei Kraftsensoren die Kräfte an unterschiedlichen Punkten messen, können ebenfalls Verdrehungen oder Drehmomente erfasst werden.

Um einen möglichst festen Halt für die Kraftmesseinrichtung 130 zu bieten, ist die Aktuatorhalterung 110 beispielsweise als eine stabile Platte ausgebildet, die entsprechende Vertiefungen aufweist, in denen sich die jeweiligen zweiten Teile 131b, 132b,... lateral verschieben können, und zwar in lediglich eine Richtung, während sie in der anderen Richtung fixiert sind.

Die Fig. 3 zeigt ebenfalls Anschlusskontakte 135, um die gemessene Kraft oder Kraftkomponente auszugeben und beispielsweise an eine Steuereinheit weiterzuleiten.

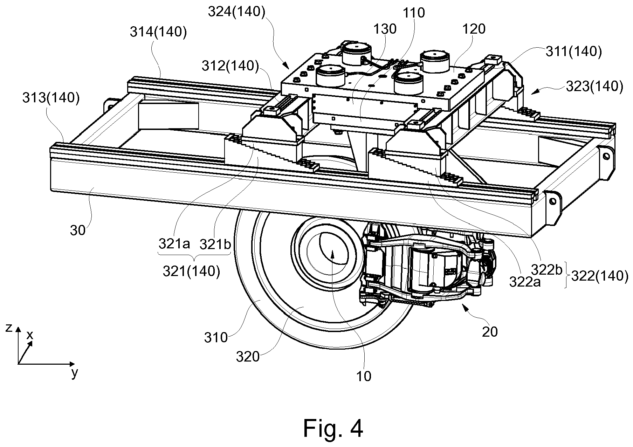

Fig. 4 zeigt ein Ausführungsbeispiel für die Vorrichtung mit einer Bewegungseinrichtung 140, die nicht nur die Erfassung von Kraftkomponenten in verschiedenen Richtungen wie in Fig. 3 erfasst, sondern ebenfalls eine Verdrehung oder Verschiebung der Aktuatorhalterung 110 während einer beispielhaften Kraftmessung bewirkt.

Dazu ist die Rahmenbefestigung 120 auf einer ersten Schiene 311 und einer gegenüberliegenden zweiten Schiene 312 befestigt, so dass die Rahmenbefestigung 120 in eine laterale x-Richtung entlang der horizontalen Ebene verschiebbar ist. Außerdem ist die erste Schiene 311 und die zweite Schiene 312 über jeweils zwei Keilstrukturen 321, 322, ... (oder anderen Höhenverschiebungseinrichtungen) mit einer dritten Schiene 313 und einer vierten Schiene 314 verbunden, so dass die Rahmenbefestigung 120 auch in eine laterale y-Richtung entlang der horizontalen Ebene verschiebbar ist. Die Vorrichtung 100 kann somit entlang einer beliebigen horizontalen Richtung verschoben werden. Da die Verschiebungen entlang der erste, zweiten, dritten und vierten Schiene 311, 312, 313, 314 - zumindest bis zu einem bestimmten Grad - unabhängig voneinander erfolgen kann, sind sogar Verdrehungen in der horizontalen x,y-Ebene möglich.

Die Keilstrukturen 321, 322, .. können jeweils an gegenüberliegenden Enden der ersten Schiene 311 und an gegenüberliegenden Enden der zweiten Schiene 312 angeordnet sein. Dies bietet den Vorteil, dass eine gewisse Hebelwirkung beim Anheben erzielt wird. In gleicher Weise können die anderen Keilstrukturen 322, 323, ... bewegbar sein. Damit wird es möglich, die Enden der ersten Schiene 311 und/oder der zweiten Schiene 312 in der Höhe (z-Achse) relativ zu der dritten Schiene 313 und/oder der vierten Schiene 314 zu bewegen. Beispielsweise umfassen die Keilstrukturen 321, 322, ... jeweils ein erstes Keilelement 321a, 322a, ... und jeweils ein zweites Keilelement 321b, 322b, ... , die bei einer relativen horizontalen Verschiebung (z.B. entlang der y-Achse) ihre Höhe ändern und dadurch die Rahmenbefestigung 120 (und dadurch auch den Bremsaktuator 20) entlang der z-Achse (Höhe) bewegen. Beispielsweise kann das erste Keilelement 321a relativ zu dem zweiten Keilelement 321b verschiebbar sein, wobei das zweite Keilelement 321b fest an der zweiten Schiene 312 befestigt ist und das erste Keilelement 321a entlang der dritten Schiene 313 bewegbar ist. Dadurch bewirkt die Höhenänderung der Keilstrukturen ein vertikales Verschieben der Rahmenbefestigung 120 (und somit des Bremsaktuators 20).

Alle Keilstrukturen 321, 322, ... können beispielsweise unabhängig voneinander bewegbar sein, so dass die Rahmenbefestigung 120 und der Bremsaktuator 20 ebenfalls um die x-Achse und/oder y-Achse drehbar sind. Das Bedienen der Keilstrukturen 321, 331,... kann beispielsweise über ein Spindelantrieb geschehen, der die Keilelement 321a, 321b, ... relativ zueinander verschiebt. Die Bewegung kann wiederum über die beispielhafte Steuereinheit gesteuert werden (z.B. während eines Bremstests). Die Keilstrukturen können auch durch anderen Höhenverstellungseinrichtungen ersetzt werden (oder Schraub- oder Spindel-Mechanismen).

Bei weiteren Ausführungsbeispielen kann die Höhenverschiebung oder die Verschiebungen in der horizontalen Ebene durch andere Bewegungselemente bewirkt werden. Die Fig. 4 stellt lediglich ein Beispiel dar, ohne die Erfindung darauf zu beschränken.

Fig. 4 zeigt ebenso das Rad 310 mit einer Bremsscheibe 320, die über den Bremsaktuator 20 abgebremst werden kann. Bei dem Abbremsvorgang wird ein Drehmoment von dem Rad 310 über den Bremsaktuator 20 auf die Aktuatorhalterung 110 übertragen. Das übertragende Drehmoment kann beispielsweise eine relative Verdrehung der Aktuatorhalterung 110 zu der Rahmenhalterung 120 um eine Achse, die parallel zu der Achse des Rades 310 ist (z.B. x-Achse), bewirken.

Gemäß der vorliegenden Erfindung können somit die Bremsbedingungen variiert werden. Ausführungsbeispiele erlauben es beispielsweise, dass der Bremsaktuator 20 und das Rad 310 relativ zueinander verdreht und/oder verschoben werden. Dies kann in beliebige Richtungen geschehen, wie es unter realen Bedingungen eines Schienenfahrzeugs vorkommen kann. Über eine optionale Auswerteeinheit können alle Kraftkomponenten (z. B. die acht Komponenten von den acht Sensoren der Fig. 3) erfasst und entsprechend ausgewertet werden. Beispielsweise können die erfassten Kräfte zu den drei Translationskräften und/oder den drei Drehmomenten (in/um die x-, y- und/oder z-Richtung) kombiniert werden.

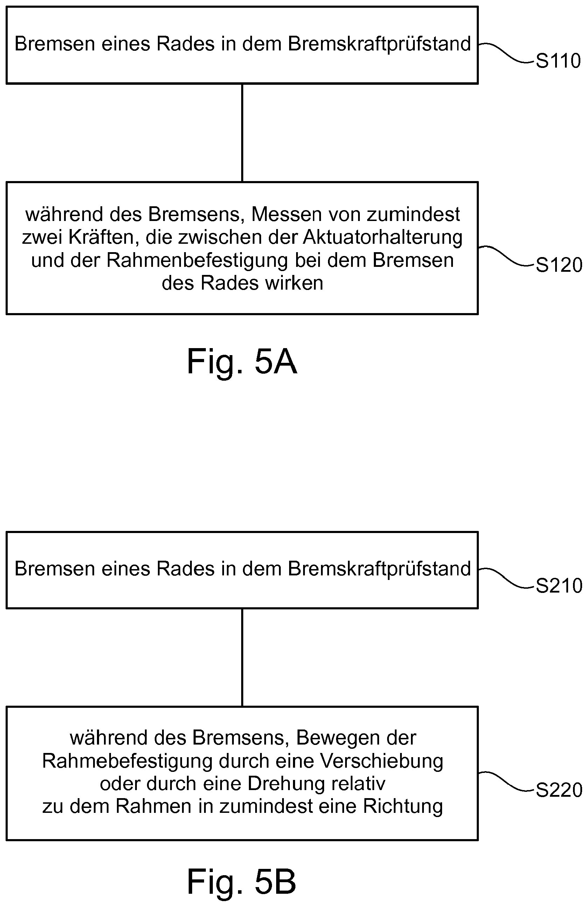

**Fig. 5A****,** B zeigen Flussdiagramme von Verfahren gemäß Ausführungsbeispielen der vorliegenden Erfindung.

Fig. 5A zeigt ein Flussdiagramm für ein erstes Verfahren zur Kraftmessung in einem Bremskraftprüfstand, wobei der Bremskraftprüfstand einen Bremsaktuator 20 zum Bremsen eines Rades und einen festen Rahmen 30 aufweist, und wobei eine Aktuatorhalterung 110 den Bremsaktuator 20 hält und eine Rahmenbefestigung 120 an dem festen Rahmen 30 befestigt ist. Das Verfahren umfasst ein Bremsen S110 eines Rades in dem Bremskraftprüfstand, und während des Bremsens S110, Messen S110 von zumindest zwei Kräften oder Drehmomenten F1, F2, die zwischen der Aktuatorhalterung 110 und der Rahmenbefestigung 120 bei dem Bremsen des Rades wirken.

Fig. 5B zeigt ein Flussdiagramm für ein zweites Verfahren für einen Bremskraftprüfstand, wobei der Bremskraftprüfstand einen Bremsaktuator 20 und einen festen Rahmen 30 umfasst und der Bremsaktuator 20 über eine Rahmenbefestigung 120 an dem Rahmen 30 befestigt ist. Das Verfahren umfasst ein Bremsen S210 eines Rades in dem Bremsprüfstand und während des Bremsens S210, ein Bewegen S220 der Rahmenbefestigung 120 durch eine Verschiebung oder durch eine Drehung relativ zu dem Rahmen 30 in zumindest eine Richtung.

Alle zuvor beschriebenen Funktionen der Vorrichtungen können als weitere optionale Verfahrensschritte in dem ersten oder dem zweiten Verfahren umgesetzt sein.

Im Vergleich zu den konventionellen Systemen weisen Ausführungsbeispiele insbesondere die folgenden Vorteile auf. Während der Bremsmessung können Abweichungen sicher erfasst werden. Insbesondere können auch kleine Abweichungen gemessen werden. Dies ist wichtig, da die Abweichungen von der nominalen Position im Allgemeinen nicht groß sind, so dass auch die Verschiebung des Bremskraftvektors im Vergleich zur Bremskraft nicht groß ist und daher häufig nicht einfach zu messen ist. Außerdem vermeiden Ausführungsbeispiele, dass zusätzliche elastische oder sogar spielbehaftete Messinstrumente den Messaufbau verfälschen. Ferner sind die Vorrichtungen gemäß der vorliegenden Erfindung einfach zu montieren und können extern kalibriert werden. Schließlich berücksichtigen Ausführungsbeispiele ebenfalls die harten Umgebungsbedingungen (insbesondere hinsichtlich der Temperatur) in Reibungsprüfständen, und führen nicht zu Fehlmessungen.

### BEZUGSZEICHENLISTE

- 10: Radhalterung
- 20: Bremsaktuator
- 30: Rahmen
- 110: Aktuatorhalterung
- 120: Rahmenbefestigung
- 130: Kraftmesseinrichtung
- 131, 132,...: Kraftsensoren
- 131a, 131b, 131d: erster, zweiter und dritter Teil des ersten Kraftsensors
- 131c, 131e: erstes und zweites Verbindungsstück
- 135: Signalleitungen
- 140: Bewegungseinrichtung
- 210: Bremshalterung
- 220: Zuspanneinheit
- 230: Bremsscheibe
- 311, 312,...: Schienen
- 321, 322,...: Keilstrukturen
- 501: Versuchsprobe
- 502: Bremsrahmen
- 503: Bremsaktuator
- 504: Welle
- 505: Luftstrom
- 506: Testkammer
- 507: Kraftwandler
- 508: Parkbremseinrichtung
- 509: Telemetriesystem
- 511: Schwungradsatz
- 512: Rahmen
- 514: elektrischer Motor
- F1, F2: Kräfte/Drehmomente

## Patentansprüche

1. Vorrichtung zur Kraftmessung für einen Bremskraftprüfstand, wobei der Bremskraftprüfstand eine Radhalterung (10), einen Bremsaktuator (20) zum Bremsen eines Rades in der Radhalterung (10) und einen festen Rahmen (30) aufweist, wobei die Vorrichtung Folgendes aufweist:
- eine Aktuatorhalterung (110), die ausgebildet ist, um den Bremsaktuator (20) zu halten;
- eine Rahmenbefestigung (120), die ausgebildet ist, um eine Befestigung an dem festen Rahmen (30) zu ermöglichen;
- eine Kraftmesseinrichtung (130), die die Aktuatorhalterung (110) und die Rahmenbefestigung (120) verbindet und ausgebildet ist, um zumindest zwei Kräfte und Drehmomente (F1, F2), die zwischen der Aktuatorhalterung (110) und der Rahmenbefestigung (120) bei einer Radbremsung wirken, zu erfassen
**dadurch gekennzeichnet, dass:**
die Kraftmesseinrichtung (130) vier Kraftsensoren (131, 132, ...) an Eckpunkten der Rahmenbefestigung (120) aufweist, die ausgebildet sind, um
Translationskräfte und Drehmomente zwischen der Aktuatorhalterung (110) und der Rahmenbefestigung (120) zu erfassen.

2. Vorrichtung nach Anspruch 1,
**dadurch gekennzeichnet, dass:**
die vier Kraftsensoren (131, 132, ...) paarweise an mehreren Punkten der Aktuatorhalterung (110) und der Rahmenbefestigung (120) angeordnet sind, um an den mehreren Punkten jeweils zwei senkrecht aufeinander wirkende Kraftkomponenten zu erfassen.

3. Vorrichtung nach einem der vorhergehenden Ansprüche,
**gekennzeichnet durch:**
einen Kraftsensor, der ausgebildet ist, um ein Drehmoment zwischen der Rahmenbefestigung (120) und dem festen Rahmen (30) zu messen.

4. Vorrichtung nach einem der vorhergehenden Ansprüche
**gekennzeichnet durch:**
- eine Bewegungseinrichtung (140), die ausgebildet ist, um die Rahmenbefestigung (120) relativ zu dem festen Rahmen (30) in zumindest eine Richtung zu verschieben oder zu verdrehen.

5. Vorrichtung nach Anspruch 4,
**dadurch gekennzeichnet, dass**
die Bewegungseinrichtung (140) ausgebildet ist, um die Aktuatorhalterung (110) in zumindest eine Raumrichtung zu verschieben oder um zumindest eine Drehachse zu drehen.

6. Vorrichtung nach einem der Ansprüche 4 oder 5,
wobei der Bremskraftprüfstand weiter eine Radhalterung (10) für ein zu bremsendes Rad umfasst,
**dadurch gekennzeichnet, dass**
die Bewegungseinrichtung (140) zumindest zwei Schienen und/oder zumindest eine Höhenverstellungseinrichtung (321, 322, ...) aufweist, um die Aktuatorhalterung (110) in zumindest einer horizontalen Richtung und/oder einer vertikalen Richtung relativ zu der Radhalterung (10) zu verschieben oder zu verdrehen.

7. Vorrichtung nach Ansprüche 6,
**dadurch gekennzeichnet, dass**
die zumindest eine Höhenverstellungseinrichtung vier Keilstrukturen (321, 322, 323, 324) aufweist, die an vier Punkte der Rahmenbefestigung (120) koppeln, wobei die vier Punkte in einer horizontalten Ebene derart um die Aktuatorhalterung (110) herum angeordnet sind, dass beim Betätigen der Bewegungseinrichtung (140) eine Hebelwirkung bereitgestellt wird.

8. Bremskraftprüfstand,
**gekennzeichnet durch:**
eine Vorrichtung nach einem der Ansprüche 1 bis 7; und eine Steuereinheit, die ausgebildet ist, um während einer Bremsprüfung die zumindest zwei Kräfte oder Drehmomente (F1, F2) zu messen und/oder die Bewegungseinrichtung (140) zu betätigen.

9. Verfahren zur Kraftmessung in einem Bremskraftprüfstand, wobei der Bremskraftprüfstand einen Bremsaktuator (20) zum Bremsen eines Rades und einen festen Rahmen (30) aufweist, und wobei eine Aktuatorhalterung (110) den Bremsaktuator (20) hält und eine Rahmenbefestigung (120) an dem festen Rahmen (30) befestigt ist,
**gekennzeichnet durch:**
- Bremsen (S110) des Rades in dem Bremskraftprüfstand; und
- während des Bremsens (S110), Messen (S110) von Translationskräften und Drehmomente (F1, F2) durch vier Kraftsensoren an Eckpunkten der Rahmenbefestigung (120), wobei die Translationskräfte und Drehmomente (F1, F2) zwischen der Aktuatorhalterung (110) und der Rahmenbefestigung (120) bei dem Bremsen des Rades wirken.

10. Verfahren nach Anspruch 9,
**gekennzeichnet durch:**
während des Bremsens (S110), Bewegen (S120) der Rahmenbefestigung (120) relativ zu dem Rahmen (30) durch eine Verschiebung in oder durch eine Drehung um zumindest eine Richtung.

11. Verfahren nach Anspruch 10,
**gekennzeichnet durch:**
Kalibrieren der Kraftmessung durch eine vorbestimmte Bremsmessung, wobei vorbestimmte Bremsmessung unter zumindest eine der folgenden Bedingungen erfolgt: vorbestimmte Bremsbelege, vorbestimmte Bremsscheibe, vorbestimmte Raddrehgeschwindigkeit, vorbestimmte Trägheitsmasse.

## Claims

1. A force-measuring device for a braking-force test bed, the braking force test bed comprising a wheel holder (10), a brake actuator (20) for braking a wheel in the wheel holder (10) and a fixed frame (30), the device comprising the following:
- an actuator holder (110) that is designed to hold the brake actuator (20);
- a frame mounting (120) that is designed to provide a fastening to the fixed frame (30);
- a force-measuring device (130) that connects the actuator holder (110) and the frame mounting (120) and is designed to detect at least two forces or torques (F1, F2) acting between the actuator holder (110) and the frame mounting (120) during wheel braking.
**characterised in that**
the force-measuring device (130) has at corner points of the frame mounting (120) four force sensors (131, 132, ...) that are designed to detect translatory forces and torques between the actuator holder (110) and the frame mounting (120).

2. A device according to claim 1,
**characterised in that**
the four force sensors (131, 132, ...) are arranged in pairs at a plurality of points on the actuator holder (110) and the frame mounting (120) in order to detect two force components that act mutually perpendicularly at each of the plurality of points.

3. A device according to any one of the preceding claims,
**characterised by**
a force sensor that is designed to measure a torque between the frame mounting (120) and the fixed frame (30).

4. A device according to any one of the preceding claims,
**characterised by**
a movement device (140) that is designed to move or rotate the frame mounting (120) in at least one direction relative to the fixed frame (30).

5. A device according to claim 4,
**characterised in that**
the movement device (140) is designed to move the actuator holder (110) in at least one spatial direction or rotate it about at least one axis of rotation.

6. A device according to any one of claims 4 or 5
the braking-force test bed further comprising a wheel holder (10) for a wheel to be braked,
**characterised in that**
the movement device (140) has at least two rails and/or at least one height adjustment device (321, 322, ...) in order to move or rotate the actuator holder (110) in at least one horizontal direction and/or a vertical direction relative to the wheel holder (10).

7. A device according to claim 6,
**characterised in that**
the at least one height adjustment device comprises four wedge structures (321, 322, 323, 324) that connect to four points on the frame mounting (120), these four points being arranged in a horizontal plane about the actuator holder (110) so as to provide a lever effect when the movement device (140) is actuated.

8. A braking-force test bed,
**characterised by**
a device according to any one of claims 1 to 7, and a control unit that is designed to measure the at least two forces or torques (F1, F2) and/or to actuate the movement device (140) during a brake test.

9. A method for measuring force in a braking-force test bed, the braking-force test bed comprising a brake actuator (20) for braking a wheel and a fixed frame (30), an actuator holder (110) holding the brake actuator (20) and a frame mounting (120) being fastened to the fixed frame (30),
**characterised by**
- the braking (S110) of the wheel in the braking-force test bed; and
- the measuring (S110), during braking (S110), of translatory forces and torques (F1, F2) by four force sensors at corner points of the frame mounting (120), these translatory forces and torques (F1, F2) acting between the actuator holder (110) and the frame mounting (12) when the wheel is braked.

10. A method according to claim 9,
**characterised by**
the movement (S120), during braking (S110), of the frame mounting (120) relative to the frame (30) by a movement in at least one direction or a rotation about at least one direction.

11. A method according to claim 10,
**characterised by**
the calibration of the force measurement by a predetermined brake measurement, this predetermined brake measurement being carried out under at least one of the following conditions: predetermined brake linings, predetermined brake disk, predetermined wheel rotation speed, predetermined inertial mass.

## Revendications

1. Installation de mesure de force d'un banc d'essai de force de frein, dans laquelle le banc d'essai de force de frein a une fixation (10) de roue, un actionneur (20) de frein pour freiner une roue dans la fixation (10) de roue et un cadre (30) fixe, dans laquelle l'installation a ce qui suit :
- une fixation (110) d'actionneur, qui est constituée pour fixer l'actionneur (20) de frein ;
- une fixation (120) de cadre, qui est constituée pour rendre possible une fixation sur le cadre (30) fixe ;
- un dispositif (130) de mesure de force, qui relie la fixation (110) d'actionneur et la fixation (120) de cadre et qui est constitué pour détecter au moins deux forces ou couples (F1, F2) qui, lors d'un freinage de roue, agissent entre la fixation (110) d'actionneur et la fixation (120) de cadre,
**caractérisée en ce que** :
le dispositif (130) de mesure de force a quatre capteurs (131, 132, ...) de force aux sommets de la fixation (120) de cadre, qui sont constitués pour détecter des forces de translation et des couples entre la fixation (110) d'actionneur et la fixation (120) de cadre.

2. Installation suivant la revendication 1,
**caractérisée en ce que** :
les quatre capteurs (131, 132, ...) de force sont montés par paires en plusieurs points de la fixation (110) d'actionneur et de la fixation (120) de cadre, afin de détecter aux plusieurs points respectivement deux composantes de force agissant perpendiculairement l'une à l'autre.

3. Installation suivant l'une des revendications précédentes, **caractérisée par** :
un capteur de force, qui est constitué pour mesurer un couple entre la fixation (120) de cadre et le cadre (30) fixe.

4. Installation suivant l'une des revendications précédentes, **caractérisée par** :
un dispositif (140) de déplacement, qui est constitué pour déplacer ou faire tourner dans au moins une direction, la fixation (120) de cadre par rapport au cadre (30) fixe.

5. Installation suivant la revendication 4,
**caractérisée en ce que**
le dispositif (140) de déplacement est constitué pour déplacer la fixation (110) d'actionneur dans au moins une direction de l'espace ou la faire tourner autour d'au moins un axe de rotation.

6. Installation suivant l'une des revendications 4 ou 5, dans laquelle le banc d'essai de force de frein comprend en outre une fixation (10) de roue pour une roue à freiner,
**caractérisée en ce que**
le dispositif (140) de déplacement a au moins deux rails et/ou au moins un dispositif (321, 322, ...) de réglage en hauteur pour déplacer, ou pour faire tourner la fixation (110) d'actionneur dans au moins une direction horizontale et/ou une direction verticale, par rapport à la fixation (10) de roue.

7. Installation suivant la revendication 6,
**caractérisée en ce que**
le au moins un dispositif de réglage en hauteur a quatre structures (321, 322, 323, 324) de coin, qui sont reliées aux quatre coins de la fixation (120) de cadre, dans laquelle les quatre coins sont disposés dans un plan horizontal autour de la fixation (110) d'actionneur, de manière à disposer, lors de l'actionnement du dispositif (140) de déplacement, d'un effet de levier.

8. Banc d'essai de force de freinage,
**caractérisé par** :
une installation suivant l'une des revendications 1 à 7 et une unité de commande, qui est constituée pour mesurer, pendant un contrôle de frein, les au moins deux forces ou couples (F1, F2) et/ou actionner le dispositif (140) de déplacement.

9. Procédé de mesure de force dans un banc d'essai de force de frein, dans lequel le banc d'essai de force de frein a un actionneur (20) de frein pour le freinage d'une roue et un cadre (30) fixe, et dans lequel une fixation (110) d'actionneur maintient l'actionneur (20) de frein et une fixation (120) de cadre est fixée au cadre (30) fixe,
**caractérisé par** :
- un freinage (S110) de la roue dans le banc d'essai de force de frein ; et
- pendant le freinage (S110) une mesure (S110) de force de translation et de couples (F1, F2) par quatre capteurs de force aux sommets de la fixation (120) de cadre, dans lequel les forces de translation et les couples (F1, F2) agissent entre la fixation (110) d'actionneur et la fixation (120) de cadre, lors du freinage de la roue.

10. Procédé suivant la revendication 9,
**caractérisé par** :
pendant le freinage (S110), déplacement (S120) de la fixation (120) de cadre par rapport au cadre (30) par un déplacement dans au moins une direction ou par une rotation dans au moins un sens.

11. Procédé suivant la revendication 10,
**caractérisé par** :
un étalonnage de la mesure de force par une mesure de freinage définie à l'avance, dans lequel une mesure de freinage définie à l'avance s'effectue dans au moins l'une des conditions suivantes : garnitures de freins définies à l'avance, disque de frein défini à l'avance, vitesse de rotation de roue définie à l'avance, masse d'inertie définie à l'avance.
